# EUROPEAN PATENT APPLICATION

(11) **EP 4 834 836 A1**
(43) Date of publication of application: **04.11.2026**
(21) Application number: 24913100.4
(22) Date of filing: 27.12.2024
(51) Int. Cl.: C01B 32/225

(54) **METHOD FOR PRODUCING FLAKED GRAPHITE DISPERSION AND FLAKED GRAPHITE DISPERSION**

(30) Priority: 28.12.2023 JP 2023222130
(71) Applicant: Jokoh Co., Ltd., Kawasaki-shi, Kanagawa 213-8588 (JP)
(72) Inventor: MINAI, Hironobu, Kawasaki-shi, Kanagawa 213-8588 (JP); IKEDA, Kimi, Kawasaki-shi, Kanagawa 213-8588 (JP)
(74) Representative: Grünecker Patent- und Rechtsanwälte PartG mbB
(86) International application number: PCT/JP2024/046375
(87) International publication number: WO 2025/143214

(57) **Abstract**

Provided is a method for producing a flaked graphite dispersion in which high dispersibility of flaked graphite is achieved. The method for producing a flaked graphite dispersion includes step 1 of subjecting a treatment object to a wet jet mill treatment to obtain flaked graphite, the treatment object containing one member selected from a group consisting of graphite and a graphite compound, and a first organic solvent different from an amide-based solvent, a ketone-based solvent, and a sulfoxide-based solvent, and step 2 of mixing a product obtained in the step 1 with at least one specific solvent selected from a group consisting of an amide-based solvent, a ketone-based solvent, and a sulfoxide-based solvent to obtain a flaked graphite dispersion.

## Description

### TECHNICAL FIELD

The present invention relates to a method for producing a flaked graphite dispersion. The present invention also relates to a flaked graphite dispersion.

### BACKGROUND ART

In recent years, flaked graphite having a small number of laminated graphene layers in graphite has attracted attention. As a method for producing flaked graphite, a method is known in which a graphite intercalation compound (GIC) is produced from graphite and subsequently subjected to an exfoliation treatment.

As a method for producing the GIC, various methods such as a gas phase method and a solution method have been proposed. In particular, a method for producing a GIC by a solution method has attracted attention because a GIC can be easily produced as compared with a gas phase method.

For example, Patent Literature 1 discloses a method for producing flaked graphite in which the GIC is subjected to an exfoliation treatment. Specifically, a method is disclosed in which a polar aprotic solvent is added to a GIC, and the resultant is then subjected to ultrasonication to produce flaked graphite. In the above procedure, a flaked graphite dispersion in which flaked graphite is dispersed in a solution is obtained.

### CITATION LIST

### PATENT LITERATURE

Patent Literature 1: JP 2015-105200 A

### SUMMARY OF INVENTION

### TECHNICAL PROBLEMS

The present inventors have produced a flaked graphite dispersion using the production method described in Patent Literature 1, and found that it is difficult to achieve high dispersibility of flaked graphite in the obtained flaked graphite dispersion.

Therefore, an object of the present invention is to provide a method for producing a flaked graphite dispersion in which high dispersibility of flaked graphite is achieved.

Another object of the present invention is to provide a flaked graphite dispersion.

### SOLUTION TO PROBLEMS

As a result of intensive studies to solve the above problems, the present inventors have found that the above problems are solved by the following configuration.

[1] A method for producing a flaked graphite dispersion, the method comprising:
   step 1 of subjecting a treatment object to a wet jet mill treatment to obtain flaked graphite, the treatment object containing one member selected from a group consisting of graphite and a graphite compound, and a first organic solvent different from an amide-based solvent, a ketone-based solvent, and a sulfoxide-based solvent; and
   step 2 of mixing a product obtained in the step 1 with at least one specific solvent selected from a group consisting of an amide-based solvent, a ketone-based solvent, and a sulfoxide-based solvent to obtain a flaked graphite dispersion.
[2] The method for producing a flaked graphite dispersion according to [1], wherein the graphite compound is used in the step 1.
[3] The method for producing a flaked graphite dispersion according to [2], wherein the graphite compound is a graphite compound in which an alkali metal is intercalated between graphene layers in graphite by mixing an alkali metal source and graphite in a second organic solvent different from an amide-based solvent, a ketone-based solvent, and a sulfoxide-based solvent.
[4] The method for producing a flaked graphite dispersion according to any one of [1] to [3], wherein in the step 2, a mass ratio of the specific solvent to the product is 0.5 to 100.
[5] The method for producing a flaked graphite dispersion according to any one of [1] to [4], wherein the specific solvent is at least one solvent selected from a group consisting of N,N-dimethylformamide, N-methyl-2-pyrrolidone, N,N-dimethylacetamide, cyclohexanone, and dimethyl sulfoxide.
[6] The method for producing a flaked graphite dispersion according to any one of [1] to [5], wherein the first organic solvent is an ether-based solvent.
[7] A flaked graphite dispersion comprising flaked graphite, a first organic solvent different from an amide-based solvent, a ketone-based solvent, and a sulfoxide-based solvent, and at least one specific solvent selected from a group consisting of an amide-based solvent, a ketone-based solvent, and a sulfoxide-based solvent, wherein
   a content of the first organic solvent is 0.1 mass% or more and less than 50 mass% with respect to a total mass of the flaked graphite dispersion, and
   a content of the specific solvent is 50 mass% or more with respect to a total mass of the flaked graphite dispersion.
[8] The flaked graphite dispersion according to [7], wherein the specific solvent is at least one solvent selected from a group consisting of N,N-dimethylformamide, N-methyl-2-pyrrolidone, N,N-dimethylacetamide, cyclohexanone, and dimethyl sulfoxide.
[9] The flaked graphite dispersion according to [7] or [8], wherein the first organic solvent contains an ether-based solvent.

### ADVANTAGEOUS EFFECTS OF INVENTION

According to the present invention, it is possible to provide a method for producing a flaked graphite dispersion in which high dispersibility of flaked graphite is achieved.

In addition, according to the present invention, it is possible to provide a flaked graphite dispersion.

### BRIEF DESCRIPTION OF DRAWINGS

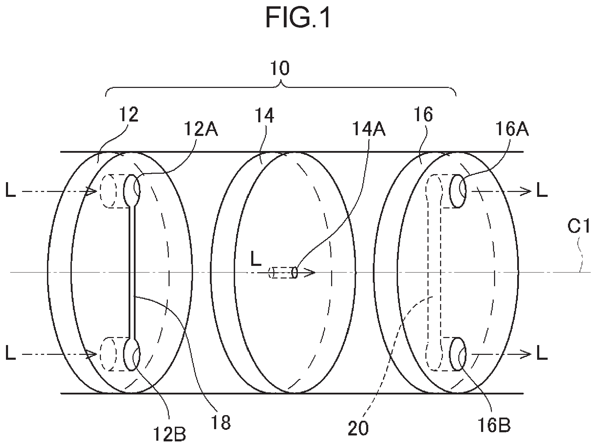

FIG. 1 is a schematic diagram for explaining a dispersion unit.

### DESCRIPTION OF EMBODIMENTS

Hereinafter, the present invention will be described in detail.

The description of the components described below may be made based on representative embodiments of the present invention, but the present invention is not limited to such embodiments.

Hereinafter, the meaning of each description in the present description will be described.

In the present description, a numerical range represented using "to" means a range including numerical values described before and after "to" as a lower limit value and an upper limit value.

In the present description, the flaked graphite is a substance obtained by subjecting original graphite to an exfoliation treatment, and the number of laminated graphene layers (graphene sheets) in the flaked graphite need only be smaller than that in the original graphite. Examples of the flaked graphite include graphene and a laminate of graphene.

When the flaked graphite is a laminate of graphene, the number of laminated graphene layers in the laminate is not particularly limited, but is preferably two or more. The upper limit is not particularly limited, but is preferably 100 layers or less, and more preferably 30 layers or less.

### <Method for producing flaked graphite dispersion>

The method for producing a flaked graphite dispersion of the present invention includes step 1 of subjecting a treatment object, which contains one member selected from a group consisting of graphite and a graphite compound, and a first organic solvent different from an amide-based solvent, a ketone-based solvent, and a sulfoxide-based solvent, to a wet jet mill treatment to obtain flaked graphite.

The method for producing a flaked graphite dispersion of the present invention also includes step 2 of mixing a product obtained in the step 1 with a specific solvent containing one selected from a group consisting of an amide-based solvent, a ketone-based solvent, and a sulfoxide-based solvent to obtain a flaked graphite dispersion.

The reason why the method for producing a flaked graphite dispersion of the present invention (hereinafter also referred to as "the present production method") achieves high dispersibility of flaked graphite in the flaked graphite dispersion is not necessarily clear; however, the present inventors presume as follows.

In the step 1, when a wet jet mill treatment is performed in the first organic solvent that is not the specific solvent, the graphite or the graphite compound is easily flaked. Furthermore, in the step 2, it is considered that when the obtained product is mixed with the specific solvent, the flaked graphite is easily dispersed in the specific solvent, thereby yielding a flaked graphite dispersion with high dispersibility.

Hereinafter, the present production method will be described.

The present production method may include a step other than the below-mentioned step 1 and step 2.

### [Step 1]

In the step 1, a treatment object, which contains one member selected from a group consisting of graphite and a graphite compound, and a first organic solvent (hereinafter also referred to as "solvent X") different from an amide-based solvent, a ketone-based solvent, and a sulfoxide-based solvent, is subjected to a wet jet mill treatment to obtain flaked graphite.

Hereinafter, the step 1 will be described in detail.

### (Graphite and graphite compound)

In the step 1, the treatment object contains one member selected from the group consisting of graphite and a graphite compound.

The graphite is not particularly limited as long as it is a compound having a structure in which graphene is laminated. Examples of the graphite include natural graphite, synthetic graphite (artificial graphite), highly oriented pyrolytic graphite, and graphite fiber. In particular, natural graphite is preferable.

Examples of the graphite compound include a graphite intercalation compound, in which another compound or the like is inserted between graphene layers in graphite. Examples of such another compound or the like contained in the graphite compound (graphite intercalation compound) include one or more members selected from the group consisting of an alkali metal, an organic compound, an inorganic compound, and ions thereof. Such another compound or the like may form a complex. More specific examples thereof include an alkali metal, an ether-based solvent, an aromatic compound, and an inorganic ion.

The graphite compound is preferably a graphite compound in which an alkali metal is intercalated between graphene layers in graphite. The graphite compound of the above aspect is obtained, for example, by mixing an alkali metal source and graphite in the below-mentioned second organic solvent (below-mentioned solvent Y). The method for producing the graphite compound of the above aspect will be described in detail later.

The graphite compound may be so-called expanded graphite. The expanded graphite refers to a graphite compound in which sulfate ions, nitrate ions, and the like are inserted between graphene layers. The expanded graphite is obtained, for example, by immersing graphite in a sulfuric acid aqueous solution containing an oxidizing agent.

### (First organic solvent (solvent X))

In the step 1, the treatment object contains the first organic solvent (solvent X) different from an amide-based solvent, a ketone-based solvent, and a sulfoxide-based solvent. The amide-based solvent, the ketone-based solvent, and the sulfoxide-based solvent will be described in detail later.

Examples of the solvent X include a hydrocarbon-based solvent, an ether-based solvent, and an ester-based solvent. In particular, an ether-based solvent is preferable from the viewpoint that the graphite or the graphite compound contained in the treatment object is more easily flaked.

The hydrocarbon-based solvent refers to a solvent of a compound formed only of C and H. The hydrocarbon-based solvent may have a cyclic structure.

Examples of the hydrocarbon-based solvent include pentane, hexane, heptane, octane, benzene, toluene, xylene, styrene, cyclopentane, cyclohexane, and methylcyclohexane.

The ether-based solvent is not particularly limited as long as it has an ether bond (-O-), and the number of ether bonds in the molecule is not limited.

The ether-based solvent may have a cyclic structure.

Examples of the ether-based solvent include dimethyl ether, diethyl ether, 1,2-dimethoxyethane (DME or glyme), diethylene glycol dimethyl ether (diglyme), furan, tetrahydrofuran (THF), 1,3-dioxolane (DOL), tetraethylene glycol dimethyl ether (TEGDME), poly(ethylene glycol) dimethyl ether (PEGDME), tetraethylene glycol dibutyl ether (DEGDBE), bis(2-ethoxyethyl) ether, and dihydrolevoglucosenone (Cyrene (registered trademark)). In particular, 1,2-dimethoxyethane or tetrahydrofuran is preferable from the viewpoint that the graphite or the graphite compound contained in the treatment object is more easily flaked.

The ester-based solvent is not particularly limited as long as it has an ester bond (-O(CO)-), and the number of ester bonds in the molecule is not particularly limited.

The ester-based solvent may have a cyclic structure.

Examples of the ester-based solvent include methyl acetate, ethyl acetate, butyl acetate, isobutyl acetate, normal propyl acetate, 2-methoxy-1-methylethyl acetate (propylene glycol monomethyl ether acetate), and 3-methoxy-3-methylbutyl acetate.

As the solvent X, only one type may be used, or two or more types may be used.

### (Wet jet mill treatment)

In the step 1, the treatment object containing the one member selected from the group consisting of graphite and a graphite compound and the solvent X is subjected to a wet jet mill treatment.

Hereinafter, the treatment object and the wet jet mill treatment will be described.

In order to efficiently obtain flaked graphite by subjecting the treatment object to a wet jet mill treatment, the solid content concentration and the viscosity are preferably in the ranges described in detail below.

The solid content concentration of the treatment object is preferably 0.1 to 10 mass% and more preferably 0.5 to 5 mass% with respect to the total mass of the treatment object from the viewpoint of efficiently obtaining flaked graphite.

The solid content in the treatment object means a component excluding the solvent in the treatment object.

The viscosity of the treatment object is preferably 1 to 20,000 mPa·s from the viewpoint that the treatment object can be treated by a wet jet mill.

As a method for measuring the viscosity, a known method can be used, and examples thereof include a method of JIS Z 8803:2011.

The solid content concentration and the viscosity of the treatment object can be adjusted by, for example, the content of the solvent X in the treatment object.

The treatment object may contain the one member selected from the group consisting of graphite and a graphite compound, and a component (another component) different from the organic solvent.

Examples of such another component include a surfactant.

Examples of such another component also include components used for producing the graphite compound.

The wet jet mill treatment is advantageous from the viewpoint that flaked graphite can be efficiently obtained by applying a shearing force to the treatment object, without grinding graphite or a graphite compound more than necessary.

The wet jet mill treatment is not limited as long as a slurry containing a solvent and powder can be caused to flow at a high speed, and as a result, the powder can be ground and/or crushed. Examples thereof include a method of causing a high-speed flowing fluid to collide with a fluid collision portion that is substantially perpendicular to the flow direction of the fluid, a method of causing a high-speed flowing fluid to pass through a constricted portion, a method of causing a plurality of high-speed flowing fluids to collide head-on with one another, a method of generating turbulent flow and causing a fluid to collide with a wall surface of a pipe or the like through which the fluid passes, and a method of applying a shearing force to a fluid by means of a cavitation jet generated by pressure reduction or the like. The wet jet mill treatment may involve a combination of these methods. In particular, a method of causing a plurality of high-speed flowing fluids to collide head-on with one another is preferable.

Examples of the wet jet mill treatment causing a plurality of fluids to collide head-on with one another include a treatment including the following step A, step B, and step C in this order.

Step A: step of causing the treatment object to collide head-on

Step B: step of causing the treatment object after collision to flow in a direction different from the direction in the step A

Step C: step of dividing the treatment object into separate flows

The method for performing the above steps A to C is not particularly limited, but it is preferable to use a dispersion unit shown in FIG. 1. Hereinafter, first, the dispersion unit shown in FIG. 1 will be described.

A dispersion unit 10 shown in FIG. 1 is a unit disposed in an apparatus for performing a wet jet mill treatment, and as described later, the steps A to C can be performed by causing the treatment object to pass through a flow channel in the dispersion unit 10.

The dispersion unit 10 includes an introduction-side disk 12, an intermediate disk 14 and a discharge-side disk 16. The introduction-side disk 12, the intermediate disk 14, and the discharge-side disk 16 each have a disk-like shape with a substantially identical diameter. The intermediate disk 14 is disposed in close contact with the introduction-side disk 12 on the downstream side in the direction of the central axis C1. The discharge-side disk 16 is disposed in close contact with the intermediate disk 14 on the downstream side in the direction of the central axis C1.

The introduction-side disk 12, the intermediate disk 14, and the discharge-side disk 16 are each formed of a wear-resistant member such as a ceramic, cemented carbide, or diamond, and are formed to have a substantially identical diameter. The introduction-side disk 12 and the discharge-side disk 16 are formed to have a substantially identical plate thickness, and the intermediate disk 14 is formed to have a plate thickness smaller than that of the introduction-side disk 12 and the discharge-side disk 16.

The introduction-side disk 12 is provided with a first through-hole 12A and a second through-hole 12B. The first through-hole 12A and the second through-hole 12B are formed to have a substantially identical diameter and are disposed at substantially symmetrical positions with respect to the center of the introduction-side disk 12.

An introduction-side groove-shaped passage 18 (first flow channel) formed with a width smaller than the hole diameter of each of the first through-hole 12A and the second through-hole 12B is disposed linearly on the surface of the introduction-side disk 12 facing the intermediate disk 14. The first through-hole 12A and the second through-hole 12B are communicated with each other via the introduction-side groove-shaped passage 18.

The intermediate disk 14 is provided with a third through-hole 14A (second flow channel) at the center thereof.

The discharge-side disk 16 is provided with a fourth through-hole 16A and a fifth through-hole 16B, which are formed to have a substantially identical diameter and are disposed at symmetrical positions with the center of the discharge-side disk 16 therebetween.

A discharge-side groove-shaped passage 20 (third flow channel) formed with a width smaller than the hole diameter of each of the fourth through-hole 16A and the fifth through-hole 16B is disposed on the surface of the discharge-side disk 16 facing the intermediate disk 14. The fourth through-hole 16A and the fifth through-hole 16B are communicated with each other via the discharge-side groove-shaped passage 20.

Next, the flow of the steps A to C using the dispersion unit will be described.

First, the treatment object is pressurized and introduced into the dispersion unit 10 as an ultra-high-speed fluid. At this time, it is preferable to perform pressurization at a pressure of 100 MPa or more and 250 MPa or less.

Upon reaching the introduction-side disk 12, the introduced treatment object L diverges and flows through the first through-hole 12A and the second through-hole 12B. The diverged treatment object L passes through each of the first through-hole 12A and the second through-hole 12B and then is, while colliing with the intermediate disk 14, forcibly redirected toward the center of the introduction-side disk 12 within the introduction-side groove-shaped passage 18. The treatment object L is then accelerated in opposing directions along a straight line and caused to collide with each other. The step A is performed as described above.

Subsequently, the flow direction of the treatment object L, which has collided and merged again, is changed to a substantially perpendicular direction, and the treatment object L is guided into the third through-hole 14A of the intermediate disk 14. At this time, a portion of the collision energy is released, and wear generated at the central portion of the introduction-side groove-shaped passage 18 of the introduction-side disk 12 is reduced. Then, the state of the turbulent flow generated by the collision is maintained. The step B is performed as described above.

Next, the treatment object L, having passed through the third through-hole 14A, further diverges again while colliding with the discharge-side disk 16 and flows through the discharge-side groove-shaped passage 20 toward the outer peripheral side of the discharge-side disk 16. In this manner, the treatment object L, having passed through the fourth through-hole 16A and the fifth through-hole 16B, is discharged from the discharge-side disk 16, merges again, and is discharged from the dispersion unit 10. The step C is performed as described above.

Examples of the apparatus for performing the wet jet mill treatment including the step A, the step B, and the step C include "NAGS20", "NAGS100", "NAGS500", and "NAGS1000" manufactured by JOKOH CO., LTD.

The wet jet mill treatment is preferably performed a plurality of times. The number of times is not particularly limited, but 2 to 100 passes are preferable. In many cases, 2 to 20 passes are performed.

The wet jet mill treatment may also be performed at two or more different liquid feed pressures. For example, the wet jet mill treatment can also be performed at a high liquid feed pressure after the wet jet mill treatment is performed at a low liquid feed pressure. The treatment at each pressure may be separately performed a plurality of times.

The wet jet mill treatment is also preferably performed with an inert gas atmosphere inside the apparatus. Examples of the inert gas include nitrogen gas and argon gas.

In addition, since the wet jet mill treatment generates heat due to compression or the like, it is also preferable to perform the wet jet mill treatment while cooling. As a cooling method, a known method can be used, and examples thereof include a method in which a refrigerant is brought into direct or indirect contact with a heat generating portion to exchange heat.

### [Step 2]

In the step 2, the product obtained in the step 1 is mixed with at least one specific solvent selected from the group consisting of an amide-based solvent, a ketone-based solvent, and a sulfoxide-based solvent.

By the step 2, a flaked graphite dispersion is obtained.

Hereinafter, the step 2 will be described.

### (Specific solvent)

In the step 2, a specific solvent is used.

The specific solvent is at least one solvent selected from the group consisting of an amide-based solvent, a ketone-based solvent, and a sulfoxide-based solvent.

The amide-based solvent refers to a solvent formed of a compound having an amide structure in the molecule.

Specifically, the amide-based solvent refers to a solvent formed of a compound represented by the following formula (a).

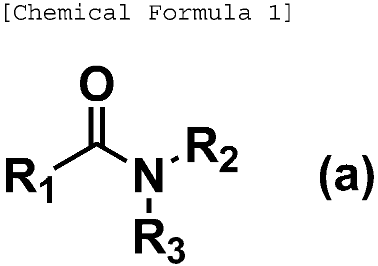

In the formula (a), R₁, R₂, and R₃ each independently represent an alkyl group which may have a substituent, or a hydrogen atom.

In the formula (a), R₁ and R₃ may be bonded to each other to form a ring, or R₂ and R₃ may be bonded to each other to form a ring.

The number of carbon atoms in the alkyl group moiety of each of the alkyl groups, which may have a substituent, represented by R₁, R₂, and R₃ is preferably 1 to 8, and more preferably 1 to 3.

Each of the alkyl groups, which may have a substituent, represented by R₁, R₂, and R₃ is also preferably an alkyl group having no substituent.

R₂ and R₃ each preferably represent an alkyl group which may have a substituent (more preferably, an alkyl group having no substituent). That is, the amide-based solvent is preferably a solvent formed of a tertiary amide compound.

It is also preferable that R₁ represents a hydrogen atom or an alkyl group having 1 to 3 carbon atoms and no substituent, and R₂ and R₃ are each an alkyl group having 1 to 3 carbon atoms and no substituent.

Examples of the amide-based solvent include N,N-dimethylformamide (DMF), N,N-diethylformamide (DEF), N-methyl-2-pyrrolidone (NMP), N,N-dimethylacetamide (DMAc), tetramethylurea, and 1,3-dimethyl-2-imidazolidinone.

In particular, N,N-dimethylformamide, N-methyl-2-pyrrolidone, or N,N-dimethylacetamide is preferable as the amide-based solvent.

The ketone-based solvent refers to a solvent formed of a compound having a carbonyl group (-CO-) in the molecule and having a carbon atom bonded to a carbon atom of the carbonyl group. That is, a compound having a ketone structure as an ester structure (-COO-), an amide structure, or the like is not included in the ketone-based solvent.

Specifically, the ketone-based solvent refers to a solvent formed of a compound represented by the following formula (b).

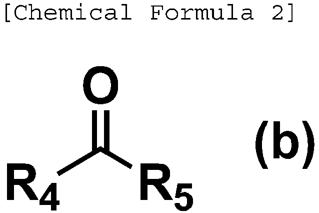

In the formula (b), R₄ and R₅ each represent an alkyl group which may have a substituent.

The alkyl groups, which may have a substituent, represented by R₄ and R₅ may be bonded to each other to form a ring.

The number of carbon atoms in the alkyl group moiety of each of the alkyl groups, which may have a substituent, represented by R₄ and R₅ is preferably 1 to 8, and more preferably 1 to 3.

The alkyl groups, which may have a substituent, represented by R₄ and R₅ are each also preferably an alkyl group having no substituent.

Examples of the ketone-based solvent include acetone, methyl ethyl ketone (MEK), diethyl ketone, methyl isobutyl ketone (MIBK), diisobutyl ketone (DIBK), cyclopentanone, and cyclohexanone.

In particular, cyclohexanone is preferable as the ketone-based solvent.

The sulfoxide-based solvent refers to a solvent formed of a compound having a sulfinyl group (-SO-) in the molecule and having a carbon atom bonded to a sulfur atom of the sulfinyl group.

Specifically, the sulfoxide-based solvent refers to a solvent formed of a compound represented by the following formula (c).

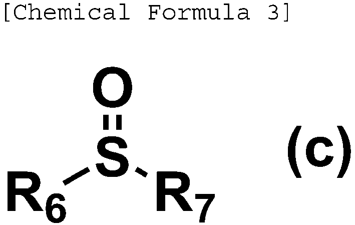

In the formula (c), R₆ and R₇ each represent an alkyl group which may have a substituent.

The alkyl groups, which may have a substituent, represented by R₆ and R₇ may be bonded to each other to form a ring.

The number of carbon atoms in the alkyl group moiety of each of the alkyl groups, which may have a substituent, represented by R₆ and R₇ is preferably 1 to 8, and more preferably 1 to 3.

The alkyl groups, which may have a substituent, represented by R₆ and R₇ are each also preferably an alkyl group having no substituent.

Examples of the sulfoxide-based solvent include dimethyl sulfoxide, di-n-butyl sulfoxide, tert-butyl methyl sulfoxide, and tetramethylene sulfoxide.

In particular, dimethyl sulfoxide is preferable as the sulfoxide-based solvent.

As the specific solvent, only one type may be used, or two or more types may be used.

The SP value (dissolution parameter) of the specific solvent is preferably 9.0 (cal/cm³)^{1/2} or more, more preferably 9.2 (cal/cm³)^{1/2} or more, and still more preferably 9.5 (cal/cm³)^{1/2} or more. The SP value of the specific solvent is preferably 18.0 (cal/cm³)^{1/2} or less, more preferably 15.0 (cal/cm³)^{1/2} or less, and still more preferably 13.0 (cal/cm³)^{1/2} or less.

The SP value is a value also called Hildebrand parameter, and a literature value can be adopted.

In the step 2, the product obtained in the step 1 is mixed with the above-described specific solvent.

The mixing ratio of the product and the specific solvent is not particularly limited, but the mass ratio of the specific solvent to the product is preferably 0.5 or more, more preferably 1 or more, still more preferably 2 or more, and particularly preferably 5 or more. The ratio is often 200 or less, preferably 100 or less, more preferably 50 or less, and still more preferably 15 or less.

The mixing method in the step 2 is not particularly limited, and a known mixing method can be applied. Examples thereof include a method of stirring a solution by a rotary blade, a method of generating convection by a pump, and a method of vibrating a container containing a treatment object.

Specific examples thereof include a mixer, a magnetic stirrer, a mechanical stirrer, and a shaker.

The mixing in the step 2 is also preferably performed in an inert atmosphere.

### [Step 3]

The present production method may further include, prior to the step 1, a step 3 of obtaining a graphite compound (graphite intercalation compound) when the treatment object subjected to the step 1 contains a graphite compound.

In the step 3, specifically, an alkali metal source and graphite are mixed in a second organic solvent (hereinafter also referred to as "solvent Y") to produce a graphite intercalation compound in which an alkali metal is intercalated between graphene layers in graphite.

In the step 3, a component other than the above components may be added.

Hereinafter, the step 3 will be described.

### (Second organic solvent (solvent Y))

The second organic solvent (solvent Y) used in the step 3 is not particularly limited, and the first organic solvent (solvent X) used in the step 1 is preferably exemplified.

In particular, the solvent Y is preferably an ether-based solvent. Examples and preferable examples of the ether-based solvent are as described above in the section of the step 1.

### (Alkali metal source)

The alkali metal source used in the step 3 is not particularly limited as long as it contains an alkali metal, and examples thereof include an alkali metal simple substance (zero-valent alkali metal) and a salt containing an alkali metal.

Examples of the alkali metal contained in the alkali metal source include lithium (Li), sodium (Na), potassium (K), rubidium (Rb), cesium (Cs), and francium (Fr). As the alkali metal, Li, Na, or K is preferable, Li or K is more preferable, and Li is still more preferable.

As the alkali metal source, lithium metal, potassium metal, or sodium metal is preferable, lithium metal or sodium metal is more preferable, and lithium metal is still more preferable.

As the alkali metal source, only one type may be used, or two or more types may be used.

### (Graphite)

The graphite used in the step 3 is not particularly limited as long as it is a compound having a structure in which graphene is laminated. Examples and preferable examples of the graphite are as described above in the section of the step 1.

### (Aromatic hydrocarbon)

In the step 3, it is preferable to mix an aromatic hydrocarbon together with an alkali metal source and graphite.

By mixing the aromatic hydrocarbon together with the above components, the dissolution of the alkali metal in the alkali metal source into the solvent is promoted, and the alkali metal can be easily intercalated into graphite due to the difference in electron affinity with graphite.

Examples of the aromatic hydrocarbon include benzene, naphthalene, phenanthrene, anthracene, and pyrene. In particular, naphthalene is preferable.

### (Mixing method and conditions)

The method for mixing various components in the step 3 is not particularly limited as long as the solvent Y, the alkali metal source, the graphite, and optional components can be mixed.

The mixing order of the components used in the step 3 is not particularly limited, and for example, various components (such as an alkali metal and graphite) may be sequentially added to the solvent Y, or various components may be simultaneously added to the solvent Y. In particular, it is preferable to add an alkali metal and graphite to the solvent Y in this order after an aromatic hydrocarbon is added to the solvent Y.

The amounts of various components used in the step 3 are not particularly limited, and can be appropriately adjusted.

The amount of the solvent Y used is preferably 50 to 99.9 mass%, more preferably 60 to 99 mass%, and still more preferably 70 to 95 mass% with respect to the total amount of the components used in the step 3.

Examples of the component used in the step 3 include the solvent Y, an alkali metal source, graphite, and an optional component.

When two or more types of the solvent Y are mixed and used, the total mass of the solvent Y is preferably in the above range.

The amount of the alkali metal source used is not particularly limited, and is preferably 2.5 to 300 mass% and more preferably 4 to 150 mass% with respect to the amount of graphite used.

The amount of graphite used is not particularly limited, and is preferably 0.1 to 10 mass% and more preferably 1 to 5 mass% with respect to the total mass of the solvent Y.

The amount of the aromatic hydrocarbon used is not particularly limited, and is preferably 50 to 500 mass%, more preferably 100 to 500 mass% with respect to the amount of graphite used.

Examples of the method for mixing the components include known methods. Examples thereof include a method of stirring a solution by a rotary blade, a method of generating convection by a pump, and a method of vibrating a container containing a treatment object.

Specific examples thereof include a magnetic stirrer, a mechanical stirrer, and a shaker.

The mixing time in the step 3 is not particularly limited, and is preferably 1 minute to 300 hours, more preferably 30 minutes to 200 hours, and still more preferably 1 to 100 hours.

The temperature at the time of mixing in the step 3 is not particularly limited, and is preferably 10 to 50°C, and more preferably 20 to 30°C.

In the step 3, the mixture may be left to stand after mixing. The standing time is, for example, 1 to 200 hours, preferably 8 to 150 hours. When the mixture is left to stand, the graphite intercalation compound settles, and solid-liquid separation in the below-mentioned step 4 can be easily performed.

While the atmosphere for performing the step 3 is not particularly limited, the step 3 is preferably performed in an inert gas atmosphere. Examples of the inert gas include nitrogen gas and argon gas.

In addition, it is preferable that the atmosphere for performing the step 3 has a low water vapor content. The dew point of the atmosphere for performing the step 3 is preferably 0°C or lower, more preferably -20°C or lower, still more preferably -40°C or lower, and particularly preferably -50°C or lower. The lower limit of the dew point of the atmosphere for performing the step 3 is not particularly limited, and is usually -100°C or higher.

### (Graphite intercalation compound)

In the step 3, the graphite intercalation compound in which an alkali metal is intercalated between graphene layers in graphite is produced. The graphite intercalation compound may be a binary system of an alkali metal and graphene, a ternary system of an alkali metal, the solvent Y, and graphene, or a quaternary or higher system containing an additive or the like in addition to the ternary system. For example, the alkali metal may form a complex with THF as a solvent, and the complex may be intercalated.

The formation of the graphite intercalation compound can be confirmed by X-ray diffraction. Specifically, this can be confirmed by the disappearance of diffraction peaks derived from the structure of graphite and the appearance of diffraction peaks corresponding to the extension of the interlayer distance between graphene layers due to intercalation.

### [Step 4]

When the treatment object subjected to the step 1 contains a graphite compound, the present production method may include a step 4 of recovering the graphite compound (graphite intercalation compound) after performing the step 3 of obtaining the graphite compound.

The recovery method is not particularly limited, and examples thereof include known methods. Examples thereof include a method of performing solid-liquid separation and a method of vaporizing a liquid from a solid-liquid mixture. Specific examples thereof include filtration (including pressurized filtration and reduced pressure filtration), decantation, centrifugation, natural drying, vacuum drying, freeze drying, and spray drying. In particular, decantation or filtration is preferable.

The decantation refers to a method in which a solid-liquid mixture is left to stand, and a liquid portion of a supernatant is removed to recover a solid content.

One or a combination of the above methods may be performed. In the recovery, for example, complete solid-liquid separation is not necessary, and a graphite compound and a solvent component (for example, solvent Y) may be contained.

### [Step 5]

In the present production method, a coarse powder removal treatment may be performed on the flaked graphite dispersion obtained by performing the step 2.

As the coarse powder removal treatment, a known treatment method (specifically, a classification treatment method) can be applied, and examples thereof include filtering, a wet cyclone treatment, and a centrifugation treatment.

### <Flaked graphite dispersion>

The flaked graphite dispersion of the present invention contains flaked graphite, a first organic solvent different from an amide-based solvent, a ketone-based solvent, and a sulfoxide-based solvent, and at least one specific solvent selected from the group consisting of an amide-based solvent, a ketone-based solvent, and a sulfoxide-based solvent.

In addition, the content of the first organic solvent is 0.1 mass% or more and less than 50 mass% with respect to the total mass of the flaked graphite dispersion, and the content of the specific solvent is 50 mass% or more with respect to the total mass of the flaked graphite dispersion.

The flaked graphite dispersion of the present invention is obtained by the method for producing a flaked graphite dispersion of the present invention.

Examples of the first organic solvent in the flaked graphite dispersion of the present invention include similar ones to those of the solvent X described above, and preferred embodiments are also similar to those of the solvent X.

Examples of the specific solvent in the flaked graphite dispersion of the present invention include similar ones to those of the specific solvent described above, and preferred embodiments are also similar to those of the specific solvent described above.

Furthermore, the flaked graphite dispersion of the present invention may contain a component used in each step of the present production method. For example, the flaked graphite dispersion of the present invention may contain an aromatic hydrocarbon.

In the flaked graphite dispersion of the present invention, the absorbance at a wavelength of 660 nm of a diluted liquid obtained by diluting the flaked graphite dispersion of the present invention 50 times is preferably 0.25 or more, more preferably 0.30 or more, still more preferably 0.40 or more, and particularly preferably 0.50 or more. The upper limit of the absorbance is not particularly limited, is, for example, 50.0 or less, often 30.0 or less, and preferably 20.0 or less.

It is considered that when the absorbance at a wavelength of 660 nm is within the above range, the dispersibility of the flaked graphite is high in the flaked graphite dispersion of the present invention.

In the present invention, the absorbance is measured using a spectrophotometer V-770 (manufactured by JASCO Corporation).

First, the flaked graphite dispersion of the present invention is diluted 50 times using the contained specific solvent to obtain a diluted liquid.

Next, the absorbance at 660 nm is measured using the spectrophotometer. When the absorbance is 1 or more, the diluted liquid is further diluted to have the absroance of 1 or less and masured, and the absorbance of 1 or less is converted to the value before dilution, which is taken as the absorbance of the flaked graphite dispersion of the present invention.

In the flaked graphite dispersion of the present invention, the content of flaked graphite is often 0.05 mass% or more and preferably 0.1 mass% or more with respect to the total mass of the flaked graphite dispersion. In addition, the content of the flaked graphite is often 25 mass% or less, preferably 15 mass% or less, and more preferably 10 mass% or less with respect to the total mass of the flaked graphite dispersion.

The content of the first organic solvent different from an amide-based solvent, a ketone-based solvent, and a sulfoxide-based solvent in the flaked graphite dispersion of the present invention is 0.1 mass% or more, often 1 mass% or more, preferably 3 mass% or more, and more preferably 5 mass% or more with respect to the total mass of the flaked graphite dispersion. The content of the first organic solvent is less than 50 mass%, preferably 30 mass% or less, and more preferably 15 mass% or less with respect to the total mass of the flaked graphite dispersion. The content of the first organic solvent may be 10 mass% or less with respect to the total mass of the flaked graphite dispersion.

The content of the specific solvent in the flaked graphite dispersion of the present invention is 50 mass% or more with respect to the total mass of the flaked graphite dispersion, and from the viewpoint that higher dispersion stability of flaked graphite is achieved, the content of the specific solvent is preferably 70 mass% or more, more preferably 80 mass% or more, and still more preferably 90 mass% or more. In addition, the content of the specific solvent is often 99.8 mass% or less, preferably 99 mass% or less, and more preferably 95 mass% or less with respect to the total mass of the flaked graphite dispersion.

The dispersion stability means that the dispersibility changes little with time, and is evaluated by the method described later.

In the flaked graphite dispersion of the present invention, the mass ratio of the content of the specific solvent to the content of the first organic solvent is preferably 0.5 or more, more preferably 1 or more, still more preferably 2 or more, and particularly preferably 5 or more. The mass ratio may be 8 or more. The mass ratio is often 200 or less, preferably 100 or less, more preferably 50 or less, and still more preferably 15 or less.

### <Applications of flaked graphite>

The applications of the flaked graphite contained in the flaked graphite dispersion of the present invention are not particularly limited, and for example, the flaked graphite can be used as a functional filler.

It is known that flaked graphite is excellent in toughness, electrical conductivity, and thermal conductivity. By using flaked graphite as a functional filler and forming a composite, a composite imparted with the above-mentioned functions can be obtained. Examples of a base material for forming a composite include a resin, a ceramic, and a metal. In addition, since the flaked graphite has a large specific surface area, functions including toughness can be effectively imparted through addition of a small amount thereof.

In addition, flaked graphite has electrical conductivity and a large specific surface area, and therefore can also be used as an electrode material for a secondary battery, an electrochemical capacitor, and the like. For example, flaked graphite is preferably used as a negative electrode material of a secondary battery.

When the flaked graphite is used for the above applications, for example, a slurry containing the flaked graphite dispersion of the present invention and other components according to each of the above applications may be prepared, the slurry may be applied in a desired form, and the solvent components contained in the slurry (for example, the first organic solvent and the specific solvent) may be removed. Since the flaked graphite dispersion of the present invention is excellent in dispersibility, the flaked graphite is likely to be uniformly dispersed in the applications, and desired properties are easily obtained.

### EXAMPLES

Hereinafter, the present invention will be described in more detail based on examples.

Materials, amounts used, proportions, processing contents, apparatuses, processing procedures, and the like shown in the following examples can be appropriately changed without departing from the gist of the present invention. Therefore, the scope of the present invention should not be restrictively interpreted by the following examples.

### <Example 1>

### [Synthesis of graphite intercalation compound (step 3)]

The synthesis of a graphite intercalation compound (step 3) was performed in a glove box filled with high purity Ar (purity 99.999%). The dew point of the glove box was -55°C.

First, 100 mL of tetrahydrofuran (THF, special grade) was placed in a 100 mL glass screw tube bottle, and 7.5 g of naphthalene (special grade) was dissolved therein. To this solution, 0.5 g of metallic lithium (purity 99.5%) was added, and the solution was stirred to dissolve the metallic lithium. To the lithium solution, 2.5 g of graphite particles (manufactured by Sigma-Aldrich Co. LLC, 808091-2.5KG, average particle diameter: 150 µm) was added, followed by stirring at 25°C for 24 hours to obtain a mixture containing a graphite intercalation compound.

When the obtained mixture containing a graphite intercalation compound was dried and subjected to XRD measurement, peaks were observed at 2θ = 6.5°, 13°, 21°, 28°, 36°, 43°, and 51°, which corresponded to (001), (002),

(003), (004), (005), (006) and (007) of stage-1 of Li-THF-GIC of the A phase. This result corresponds to a structure in which a complex of lithium coordinated with a THF molecule is co-intercalated between graphite layers, and indicates that the interlayer spacing of the graphite layers has expanded to approximately 1.10 nm.

### [Step 1]

To the mixture containing the graphite intercalation compound obtained in the above procedure, 200 mL of THF (tetrahydrofuran, corresponding to the solvent X) was added to obtain a treatment object, and a wet jet mill treatment was performed. The wet jet mill treatment was performed using "NAGS20 (AC200V specification)" manufactured by JOKOH CO., LTD. Conditions of the apparatus were as follows.
· Normal nozzle
· Nozzle diameter: φ 0.15 mm
· Chiller set temperature: 0°C
· Liquid feed pressure: 200 MPa

Under the above conditions of the apparatus, the wet jet mill treatment was performed for five passes to obtain a flaked graphite dispersion A.

### [Step 2]

A flaked graphite dispersion was obtained by mixing 10 mL of the product (dispersion A) obtained in the step 1 and 90 mL of NMP (N-methyl-2-pyrrolidone, corresponding to specific solvent).

### [Step 5]

After obtaining the flaked graphite dispersion obtained in the step 2, the flaked graphite dispersion was subjected to a centrifugation treatment at 2000 rpm for 2 minutes using a centrifuge (Optima XE-90 manufactured by Beckman) to recover a supernatant. By the above treatment, coarse particles were removed, and a flaked graphite dispersion 1 was obtained. When the coarse particles were floating on the surface of the flaked graphite dispersion after the above treatment, an intermediate liquid was collected.

### [Measurement of absorbance]

The obtained flaked graphite dispersion 1 was diluted 50 times with NMP to obtain a diluted liquid, and the absorbance at 660 nm was measured using a spectrophotometer V-770 (JASCO Corporation). The measurement method is as described above.

### [Evaluation of dispersion stability]

The flaked graphite dispersion 1 was left to stand for 7 days, and then the absorbance was measured in the same manner as described above. The above standing was performed in an environment at 20°C.

### <Examples 2 to 10>

Flaked graphite dispersions 2 to 10 were obtained in the same manner as in Example 1 except that, in the procedure for obtaining the flaked graphite dispersion 1 of Example 1, the dilution ratio and the type of the specific solvent used in the step 2 were changed as shown in the table below.

The absorbance was measured in the same manner as in Example 1. In Examples 2 to 4, dispersion stability was evaluated in the same manner as in Example 1.

### <Comparative Examples 1 to 7>

Flaked graphite dispersions C1 to C7 were obtained in the same manner as in Example 1 except that, in the procedure for obtaining the flaked graphite dispersion 1 of Example 1, solvents shown in the table below were used instead of the specific solvent used in the step 2.

### <Example 21>

### [Synthesis of graphite intercalation compound (step 3 and step 4)]

The synthesis of a graphite intercalation compound (step 3) was performed in a glove box filled with high purity Ar (purity 99.999%). The dew point of the glove box was -55°C.

First, 100 mL of tetrahydrofuran (THF, special grade) was placed in a 100 mL glass screw tube bottle, and 7.5 g of naphthalene (special grade) was dissolved therein. To this solution, 0.5 g of metallic lithium (purity 99.5%) was added, and the solution was stirred to dissolve the metallic lithium. To the lithium solution, 2.5 g of graphite particles (manufactured by Nippon Graphite Industries, Co., Ltd., particle diameter: 500 µm to 1 mm) was added, followed by stirring at 25°C for 48 hours to obtain a mixture containing a graphite intercalation compound. This mixture was left to stand for 120 hours, and the supernatant was removed, whereby solid-liquid separation was performed, and a graphite intercalation compound was obtained (step 4).

When the obtained graphite intercalation compound was subjected to XRD measurement, peaks were observed at 2θ = 6.5°, 13°, 21°, 28°, 36°, 43°, and 51°, which corresponded to (001), (002), (003), (004), (005), (006) and (007) of stage-1 of Li-THF-GIC of the A phase. This result corresponds to a structure in which a complex of lithium coordinated with a THF molecule is co-intercalated between graphite layers, and indicates that the interlayer spacing of the graphite layers has expanded to approximately 1.10 nm.

### [Step 1]

A wet jet mill treatment followed the mixing of 22 g of the obtained graphite intercalation compound and 88 mL of THF. The wet jet mill treatment was performed using "NAGS20 (AC200V specification)" manufactured by JOKOH CO., LTD. Conditions of the apparatus were as follows.
· Straight nozzle (model number: J01502S)
· Nozzle diameter: φ 0.15 mm
· Chiller set temperature: 0°C
· Discharge speed: 38.5 × 10⁴ ± 1 × 10⁴
· Liquid feed pressure: 120 MPa

Under the above conditions of the apparatus, the wet jet mill treatment was performed for 22 passes to obtain a flaked graphite dispersion B.

### [Step 2]

A flaked graphite dispersion 21 was obtained by mixing 10 mL of the product (dispersion B) obtained in the step 1 and 90 mL of NMP (corresponding to specific solvent).

### [Measurement of absorbance]

The absorbance of the flaked graphite dispersion 21 of Example 21 was measured in the same manner as in the case of the flaked graphite dispersion 1 of Example 1.

### <Examples 22 to 25>

Flaked graphite dispersions 22 to 25 were obtained in the same manner as in Example 21 except that, in the procedure for obtaining the flaked graphite dispersion 21 of Example 21, the dilution ratio and the type of the specific solvent used in the step 2 were changed as shown in the table below.

The absorbance was measured in the same manner as in Example 21.

### <Comparative Examples 21 and 22>

Flaked graphite dispersions C21 and C22 were obtained in the same manner as in Example 1 except that, in the procedure for obtaining the flaked graphite dispersion 21 of Example 21, solvents shown in the table below were used instead of the specific solvent used in the step 2.

### <Results>

The type of the solvent used in the step 2 and the dilution ratio in each example and each comparative example, and the measurement results of the absorbance are shown in Tables 1 and 2.

In Tables 1 and 2, the abbreviations in the column of "Solvent used in step 2" represent the following solvents.
· MNP: N-methyl-2-pyrrolidone
· DMF: N,N-dimethylformamide
· DMAc: N,N-dimethylacetamide
· DMSO: dimethyl sulfoxide
· MEK: methyl ethyl ketone
· THF: tetrahydrofuran
· MeOH: methanol
· EtOH: ethanol
· IPA: isopropyl alcohol
· nBtOH: n-butanol

In addition, in the column of "Dilution ratio" in Tables 1 and 2, for example, the notation of "1:9" indicates that the product 1 obtained in the step 1 and the specific solvent or the like were mixed in the step 2 at a volume ratio of the specific solvent or the like of 9 to the product obtained in the step 1 of 1.

**[Table 1]**

| Table 1 | | EX1 | EX2 | EX3 | EX4 | EX5 | EX6 | EX7 | EX8 | EX9 | EX10 | CE 1 | CE2 | CE 3 | CE 4 | CE 5 | CE 6 | CE7 |
|---|---|---|---|---|---|---|---|---|---|---|---|---|---|---|---|---|---|---|
| Production method | Type of solvent used in step 2 | NMP | NMP | NMP | NMP | DMF | DMAc | Cyclo-hexanone | DMSO | MEK | Acetone | Ethylene glycol | THF | Ultrapure water | MeOH | EtOH | IPA | nBtOH |
| | SP value of solvent used in step 2 [(cal/cm³)^{1/2}], | 11.3 | 11.3 | 11.3 | 11.3 | 12.1 | 10.8 | 9.9 | 14.5 | 9.3 | 9.9 | 14.6 | 9.1 | 23.4 | 14.5 | 12.7 | 11.9 | 11.4 |
| | Dilution ratio | 1:9 | 1:6 | 1:3 | 1:1 | 1:9 | 1:9 | 1:9 | 1:9 | 1:9 | 1:9 | 1:9 | 1:9 | 1:9 | 1:9 | 1:9 | 1:9 | 1:9 |
| Flaked graphite dispersion | Content of flaked graphite [mass%] | 0.11 | 0.16 | 0.28 | 0.59 | 0.11 | 0.12 | 0.11 | 0.11 | 0.06 | 0.06 | 0.0005 | 0.01 | 0.00003 | 0.0001 | 0.0003 | 0.003 | 0.01 |
| | Content of solvent X [mass%] | 8.98 | 12.88 | 22.80 | 46.78 | 8.98 | 8.97 | 8.98 | 8.98 | 9.03 | 9.03 | 9.0904 | 9.08 | 9.09088 | 9.0908 | 9.0906 | 9.088 | 9.08 |
| | Content of solvent used in step 2 [mass%] | 90.91 | 86.96 | 76.92 | 52.63 | 90.91 | 90.91 | 90.91 | 90.91 | 90.91 | 90.91 | 90.9091 | 90.91 | 90.90909 | 90.9091 | 90.9091 | 90.909 | 90.91 |
| | Absorbance | 0.54 | 0.79 | 1.38 | 2.88 | 0.544 | 0.573 | 0.534 | 0.536 | 0.285 | 0.288 | 0.0023 | 0.054 | 0.00014 | 0.00048 | 0.00128 | 0.016 | 0.035 |
| | Absorbance after standing for 7 days | 0.53 | 0.70 | 1.04 | 1.30 | - | - | - | - | - | - | - | - | - | - | - | - | - |

| | | | | | | | | | | | | | | | | | | |
|---|---|---|---|---|---|---|---|---|---|---|---|---|---|---|---|---|---|---|
| EX: Example CE: Comparative Example | | | | | | | | | | | | | | | | | | |

**[Table 2]**

| Table 2 | | EX 21 | EX 22 | EX 23 | EX 24 | EX 25 | CE 21 | CE 22 |
|---|---|---|---|---|---|---|---|---|
| Production method | Type of solvent used in step 2 | NMP | DMF | Cyclo-hexanone | NMP | NMP | Ultrapure water | EtOH |
| | SP value of solvent used in step 2 [(cal/cm³)^{1/2}] | 11.3 | 12.1 | 9.9 | 11.3 | 11.3 | 23.4 | 12.7 |
| | Dilution ratio | 1:9 | 1:9 | 1:9 | 1:3 | 1:1 | 1:9 | 1:9 |
| Flaked graphite dispersion | Content of flaked graphite [mass%] | 0.29 | 0.27 | 0.29 | 0.55 | 0.81 | 0.004 | 0.02 |
| | Content of solvent X [mass%] | 8.80 | 8.82 | 8.80 | 22.53 | 46.56 | 9.087 | 9.07 |
| | Content of solvent used in step 2 [mass%] | 90.91 | 90.91 | 90.91 | 76.92 | 52.63 | 90.909 | 90.91 |
| | Absorbance | 1.44 | 1.34 | 1.43 | 2.69 | 4.00 | 0.02 | 0.12 |

| | | | | | | | | |
|---|---|---|---|---|---|---|---|---|
| EX: Example CE: Comparative Example | | | | | | | | |

From the results shown in Tables 1 and 2, it was verified that high dispersibility of flaked graphite in the obtained flaked graphite dispersion was achieved in each example using the specific solvent as the solvent used in the step 2. On the other hand, in comparative examples in which the specific solvent was not used as the solvent used in the step 2, the dispersibility of flaked graphite was not higher than that in each example.

Comparing Examples 1 and 5 to 8 with Examples 9 and 10, it was verified that when the specific solvent used in the step 2 is at least one solvent selected from the group consisting of N,N-dimethylformamide, N-methyl-2-pyrrolidone, N,N-dimethylacetamide, cyclohexanone, and dimethyl sulfoxide, higher dispersibility of flaked graphite is achieved.

When flaked graphite in the flaked graphite dispersion was recovered and analyzed by Raman spectroscopy, the flaked graphite was formed of 2 to 3 graphene layers on average.

### Reference Signs List

- 10: Dispersion unit
- 12: Introduction-side disk
- 12A: First through-hole
- 12B: Second through-hole
- 14: Intermediate disk
- 14A: Third through-hole
- 16: Discharge-side disk
- 16A: Fourth through-hole
- 16B: Fifth through-hole
- 18: Introduction-side groove-shaped passage
- 20: Discharge-side groove-shaped passage
- C1: Central axis

## Claims

1. A method for producing a flaked graphite dispersion, the method comprising:
step 1 of subjecting a treatment object to a wet jet mill treatment to obtain flaked graphite, the treatment object containing one member selected from a group consisting of graphite and a graphite compound, and a first organic solvent different from an amide-based solvent, a ketone-based solvent, and a sulfoxide-based solvent; and
step 2 of mixing a product obtained in the step 1 with at least one specific solvent selected from a group consisting of an amide-based solvent, a ketone-based solvent, and a sulfoxide-based solvent to obtain a flaked graphite dispersion.

2. The method for producing a flaked graphite dispersion according to claim 1, wherein the graphite compound is used in the step 1.

3. The method for producing a flaked graphite dispersion according to claim 2, wherein the graphite compound is a graphite compound in which an alkali metal is intercalated between graphene layers in graphite by mixing an alkali metal source and graphite in a second organic solvent different from an amide-based solvent, a ketone-based solvent, and a sulfoxide-based solvent.

4. The method for producing a flaked graphite dispersion according to any one of claims 1 to 3, wherein in the step 2, a mass ratio of the specific solvent to the product is 0.5 to 100.

5. The method for producing a flaked graphite dispersion according to any one of claims 1 to 3, wherein the specific solvent is at least one solvent selected from a group consisting of N,N-dimethylformamide, N-methyl-2-pyrrolidone, N,N-dimethylacetamide, cyclohexanone, and dimethyl sulfoxide.

6. The method for producing a flaked graphite dispersion according to any one of claims 1 to 3, wherein the first organic solvent is an ether-based solvent.

7. A flaked graphite dispersion comprising flaked graphite, a first organic solvent different from an amide-based solvent, a ketone-based solvent, and a sulfoxide-based solvent, and at least one specific solvent selected from a group consisting of an amide-based solvent, a ketone-based solvent, and a sulfoxide-based solvent, wherein
a content of the first organic solvent is 0.1 mass% or more and less than 50 mass% with respect to a total mass of the flaked graphite dispersion, and
a content of the specific solvent is 50 mass% or more with respect to a total mass of the flaked graphite dispersion.

8. The flaked graphite dispersion according to claim 7, wherein the specific solvent is at least one solvent selected from a group consisting of N,N-dimethylformamide, N-methyl-2-pyrrolidone, N,N-dimethylacetamide, cyclohexanone, and dimethyl sulfoxide.

9. The flaked graphite dispersion according to claim 7 or 8, wherein the first organic solvent contains an ether-based solvent.
